# EUROPÄISCHE PATENTSCHRIFT

(11) **EP 1 378 530 B1**
(45) Veröffentlichungstag und Bekanntmachung des Hinweises auf die Patenterteilung: **11.01.2006**
(21) Anmeldenummer: 03013997.6
(22) Anmeldetag: 20.06.2003
(51) Int. Cl.: C08G 18/09, C08G 18/79

(54) **Verfahren zur Herstellung monomerenarmer TDI-Trimerisate**
Process for producing TDI trimers having a low monomer content
Procédé de production de trimères TDI à faible teneur en monomères

(30) Priorität: 03.07.2002 DE 10229781
(43) Veröffentlichungstag der Anmeldung: 07.01.2004
(73) Patentinhaber: Bayer MaterialScience AG, 51368 Leverkusen (DE)
(72) Erfinder: Brahm, Martin, Dr., 51519 Odenthal (DE); Wilmes, Oswald, Dr., 51061 Köln (DE); Simon, Joachim, Dr., 40589 Düsseldorf (DE)

(56) Entgegenhaltungen:
- DE-A- 3 420 923
- DE-A- 3 928 503
- US-A- 4 456 709
- US-A- 4 698 371

## Beschreibung

Die Erfindung betrifft ein neues Verfahren zur Herstellung monomerenarmer Trimerisate auf Basis 2,4- und/oder 2,6-Diisocyanatotoluol (TDI).

Die Herstellung Isocyanuratgruppen enthaltender Polyisocyanate ist seit langem bekannt und in einer Vielzahl von Publikationen beschrieben (z.B. Houben-Weyl, Methoden der organischen Chemie Band 8, S. 136f, Georg Thieme Verlag Stuttgart 1952; H. Wagner, H. F. Sarx, Lackkunstharze 5. Auflage, Seite 153ff, Carl Hanser Verlag München 1971; DE-A 4 428 107, US-A 2 993 870; DE-A 1 201 992; DE-A 2 452 532; J. prakt. Chem. 336, S. 185-200, 1994). Sowohl Trimerisate auf Basis aliphatischer als auch aromatischer Diisocyanate werden universell als Lackrohstoffe sowie als Polyurethanelastomere und Polyurethanschäume eingesetzt.

Aus arbeitshygienischer Sicht werden als Produkte monomerenarme Trimerisat-Typen bevorzugt. Hergestellt werden diese Produkte entweder durch destillatives Abtrennen des überschüssigen Monomers nach erfolgter Trimerisationsreaktion oder durch Steuerung der Trimerisationsreaktion zu entsprechend hohen Umsätzen, bis das Monomer weitestgehend sich zu höheroligomeren Isocyanuraten umgesetzt hat. Letzteres Verfahren führt vorzugsweise dann zum Erfolg, wenn die eingesetzten Diisocyanate - wie im Falle von 2,4-Toluylendiisocyanat - zwei deutlich unterschiedlich reaktive Isocyanatgruppen tragen. Entsptechende Lösemittel enthaltende Produkte können so mit einem Gehalt an monomerem TDI (Summe der isomeren Toluylendiisocyanate) von < 0,5 % hergestellt werden (z.B. Desmodur® IL, Verkaufsprodukt der Bayer AG, 50 %ig in Butylacetat, NCO-Gehalt: 8,0 %).

Durch die Verschärfung der Kennzeichnung TDI-basierter Produkte ist das Interesse an weitgehend monomerenfreien Typen, d.h. Produkten mit TDI-Gehalten von < 0,1 Gew.%, stark in den Vordergrund gerückt. Um dies zu erreichen sollten die Ausgangsrohstoffe TDI-basierter Lacksysteme deutlich kleiner 0,5 Gew.% TDI, vorzugsweise < 0,1 Gew.% enthalten.

Prinzipiell lässt sich dieses Ziel in einfacher Weise durch weitergehende Trimerisation zu noch höheren Umsätzen und somit noch höheren Molekulargewichten erreichen. Dies geht zum einen jedoch auf Kosten einer niedrigen Viskosität, zum anderen führt diese Vorgehensweise zu Produkten mit immer weniger reaktiven Isocyanatgruppen. Des weiteren beeinflusst diese Maßnahme in zunehmendem Maße die Verträglichkeit bei der Abmischung mit anderen Lackrohstoffen.

Es hat jedoch nicht an Anstrengungen gefehlt auf andere Wege den Gehalt an Monomer zu reduzieren.

Die Verwendung von Nicht-Lösungsmitteln für Trimerisate zur Gleichgewichtsverschiebung wird z.B. in der JP-A 56 059 828 beschrieben. Destillationsverfahren für "gedünnschichtete TDI-Trimerisate" (z.B. DE-A 3 420 923, DE-A 19 618 230, DE-A 712 840) beziehungsweise Verfahren, die eine Vor- oder Nachbehandlungsstufe - wie beispielsweise Nachurethanisierung - einsetzen, sind bekannt (z.B. DE-A 3 928 503, US-A 3 384 624, DE-A 2 414 413, DE-A 19 523 657, DE-A 19 523 657, JP-A2 000 273 142). Selbst besonders schonende Verfahren zur selektiven Trimerisation bei tiefen Temperaturen werden diskutiert (JP-A 63 260 915). Alle beschriebenen Methoden führen jedoch zu sehr komplexen, oft mehrstufigen technischen Verfahren, sind mit sehr langen Reaktionszeiten und damit schlechter Raum/Zeitausbeute verbunden, bzw. sind aus dem Laborstadium nicht in die Technik übertragbar.

Es war daher Aufgabe der vorliegenden Erfindung, ein einfaches Verfahren zur Herstellung weitgehend monomerenfreier TDI-Trimerisat-Lösungen bereitzustellen, wobei auf zusätzliche Verfahrensschritte bzw. eine zusätzliche physikalische Abtrennung von monomerem TDI verzichtet werden kann.

Diese Aufgabe konnte mit dem nachstehend näher beschriebenen erfindungsgemäßen Verfahren gelöst werden.

Gegenstand der Erfindung ist ein Verfahren zur Herstellung Lösemittel und Isocyanuratgruppen enthaltender Polyisocyanate auf Basis 2,4- und/oder 2,6-Diisocyanatotoluol mit einem Gehalt an monomerem Diisocyanat von < 0,1 Gew.%, dadurch gekennzeichnet, dass in einer Mischung aus
A) 20 bis 80 Gew.-% einer Diisocyanatkomponente enthaltend mindestens 80 Gew.% 2,4- und/oder 2,6-Diisocyanatotoluol,
B) 20 bis 80 Gew.-% Lösemittel und
C) 0 bis 20 Gew.% einer Alkoholkomponente, sowie
D) Dialkylaminomethylgruppen enthaltenden phenolischen Katalysatoren,

bei einer Temperatur von 20°C bis 120° eine katalytische Trimerisationsreaktion durchgeführt wird und während der laufenden Trimerisierung in einem oder mehreren Schritten zusätzlich 0,1 bis 25 Gew.-%, bezogen auf die Einsatzmenge an Diisocyanaten, monomeres 2,4-Diisocyanatotoluol zudosiert wird und anschließend, gegebenenfalls durch Zugabe von Katalysatorgiften (Abstoppung), die Reaktion beendet wird.

Das erfindungsgemäße Verfahren steht scheinbar im Widerspruch zum angestrebten Ziel, den Restmonomerengehalt der Produkte zu minimieren. Allgemein existiert die Anschauung, dass durch eine Verlängerung der Reaktionszeit der Umsatz an Monomer steigen sollte - während eine Verkürzung das Gegenteil bewirken sollte. Bei einer Zudosierung von weiterem Monomer während der Reaktion sollte somit einem Teil der Monomere nur eine verkürzte Reaktionszeit zur Verfügung stehen - und damit der Monomerengehalt vergleichsweise eher steigen. Experimentell hat sich jedoch gezeigt, dass die Zudosierung von zusätzlichem 2,4-Diisocyanatotoluol zu einer deutlichen Reduzierung des Restmonomeranteils auf < 0,1 Gew.% TDI führt.

Mit dem erfindungsgemäßen Verfahren werden Isocyanuratgruppen enthaltende Polyisocyanat-Lösungen mit < 0,10 Gew.% freiem TDI, bevorzugt mit < 0,05 Gew.% freiem TDI hergestellt.

Im erfindungsgemäßen Verfahren beträgt die Menge des während der laufenden Trimerisierung zusätzlich zudosierten monomeren 2,4-Diisocyanatoluols vorzugsweise 10 bis 20 Gew.%, besonders bevorzugt 1 bis 10 Gew.%, bezogen auf die Einsatzmenge an Diisocyanaten.

Als Diisocyanatkomponente A) können erfindungsgemäß Isocyanatgruppen aufweisende Verbindungen und Gemische davon eingesetzt werden, wobei diese mindestens 80 Gew.%, vorzugsweise mindestens 90 Gew.% 2,4- und/oder 2,6-Diisocyanatotoluol enthalten. Besonders bevorzugt wird 2,4- und/oder 2,6-Diisocyanatotoluol eingesetzt, vorzugsweise nicht in Abmischung mit anderen Isocyanatkomponenten.

Neben 2,4- und/oder 2,6-Diisocyanatotoluol kann die Isocyanatkomponente A) auch noch enthalten:
Monoisocyanate mit aliphatisch, cycloaliphatisch, araliphatisch oder aromatisch gebundenen Isocyanatgruppen wie z. B. Stearylisocyanat, Naphthylisocyanat;
Diisocyanate mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondüsocyanat, IPDI), 4,4'-Diisocyanatodicyclohexylmethan, 1-Isocyanato-1-methyl-4(3)-isocyanatomethylcyclohexan (IMCI), Bis-(isocyanatomethyl)-norboman, 2,4- und 2,6-Diisocyanatotoluol (TDI), 2,4'- und 4,4'-Diisocyanatodiphenylmethan und höhere Homolage, 1,5-Diisocyanatonaphthalin, Dipropylenglycoldiisocyanat;
Triisocyanate und/oder höherfunktioneller Isocyanate wie z. B. 4-Isocyanatomethyl-1,8-octandiisocyanat (Nonantriisocyanat), 1,6,11-Undecantrüsocyanat oder beliebige Gemische solcher Isocyanatverbindungen.

Neben TDI in der Mischung als Isocyanatkomponente A) sind ebenfalls einsetzbar sogenannte modifizierte Isocyanatverbindungen die sich aus den oben erwähnten Diisocyanaten und Triisocyanaten ableiten und durch Oligomerisierungsreaktionen wie beispielsweise Urethanisierung, Biuretisierung, Allophanatisierung oder Trimerisation hergestellt werden.

Besonders bevorzugt wird ein Gemisch aus den isomeren 2,4- und 2,6-Toluylendiisocyanaten eingesetzt, insbesondere ein Gemisch aus 75 bis 85 Gew.% 2,4-TDI und 25 bis 15 Gew.-% 2,6-TDI. In diesem Gemisch beträgt das Gewichtsverhältnis 2,4:2,6-TDI, vorzugsweise 3:2 bis 9:1.

Als Lösemittel B) können in der Polyurethanchemie gebräuchliche Verdünnungsmittel wie beispielsweise Toluol, Xylol, Cyclohexan, Chlorbenzol, Butylacetat, Ethylacetat, Ethylglykolacetat, Pentylacetat, Hexylacetat, Methoxypropylacetat, Tetrahydrofuran, Dioxan, Aceton, N-Methylpyrrolidon, Methylethylketon, Testbenzin, höher substituierte Aromaten, wie beispielsweise unter der Bezeichnung Solvent Naphtha®, Solvesso®, Shellsol®, Isopar®, Nappar® und Diasol® im Handel, Schwerbenzin, Tetralin, Dekalin und Alkane mit mehr als 6 Kohlenstoffatomen, übliche Weichmacher, wie Phthalate, Sulfonsäureester und Phosphorsäureester, sowie Gemische derartiger Lösungsmittel eingesetzt werden. Die Konzentration des Lösemittels wird hierbei auf 20 bis 80 Gew.%, vorzugsweise 40 bis 60 Gew.-% eingestellt.

Weiterhin geeignet als Lösemittel B) sind Polyisocyanate auf Basis aliphatischer Diiisocyanate wie sie in der DE-A 4428 107 und DE-A 506 004 beschrieben sind. Hiermit sind verdünnte monomerenarme TDI-Trimerisate zugänglich, die keine leicht verdampfbaren Lösemittel enthalten.

Als Katalysatoren C) zur Initierung und Beschleunigung der Trimerisationsreaktion kommen spezielle Systeme in Betracht, die auch bei höheren Temperaturen zu einem selektiven Einbau von TDI führen. Solche Katalysatorsysteme weisen an Aromaten gebundene N,N-Dialkylaminomethylgruppen und phenolische OH-Gruppen auf (Alkyl: C₁-C₃-Alkylkette und/oder Alkylenkette mit 1 bis 18 Kohlenstoffatomen, die gegebenenfalls durch Sauerstoff oder Schwefel getrennt sind).

Diese Gruppen können auf mehrere Moleküle verteilt, oder an einem oder mehreren Aromaten positioniert sein. Vorzugweise werden Verbindungen als Katalysatorsysteme eingesetzt, die sowohl Hydroxyl- als auch Dialkylaminomethylgruppen in einem Molekül enthalten.

Besonders bevorzugt werden Systeme eingesetzt, deren C₁-C₃-Dialkylaminomethylgruppen in ortho-Stellung zu aromatischen Hydroxylgruppen positioniert sind.

Als Beispiele seien folgende Mannichbasen genannt; wie sie z.B. auf Basis von Phenol, p-Isononylphenol oder Bisphenol A durch Umsetzung mit Dimethylamin und Formaldehyd z.B. nach der DE-A 2 452 531 oder Synth.Commun. (1986), 16, 1401-9 erhalten werden.

Die erfindungsgemäße Trimerisationsreaktion wird bei Temperaturen von 20 bis 120°C, vorzugsweise von 50 bis 80°C ausgeführt.

Erfindungswesentlich ist während der Trimerisationsreaktion die einfache oder gegebenenfalls mehrfache zusätzliche Zugabe von 2,4-Diisocyanatotoluol zur Reaktionsphase, woraus ein deutlich verminderter Gehalt an Rest-TDI im Produkt resultiert. Das 2,4-Diisocyanatotoluol kann hierbei rein, als Gemisch mit anderen erfindungsgemäßen Diisocyanatkomponenten A) oder aber auch gelöst in einem erfindungsgemäßen Lösemittel B) vorliegen.

Üblicherweise wird beim Erreichen von TDI-Restmonomergehalten kleiner 5 Gew.%, vorzugsweise kleiner 2 Gew.% und besonders bevorzugt kleiner 1 Gew.% das Diisocyanat zugegeben, wobei vorzugsweise weniger als 10 Gew.-% besonders bevorzugt weniger als 5 Gew.%, bezogen auf die gesamte eingesetzte Monomermenge an Diisocyanatkomponente zugegeben wird. Der Restmonomergehalt kann gaschromatographisch ermittelt werden. Experimentell kann auch eine Korrelationskurve für den Zusammenhang zwischen Restmonomergehalt und NCO-Gehalt ermittelt werden.

Die Katalysatoren D) werden als Reinsubstanz oder gelöst ggf. in mehreren kleinen Portionen oder kontinuierlich eingesetzt. Insgesamt werden für die Herstellung 0,003 bis 2,0 Gew.% vorzugsweise 0,01 bis 0,5 Gew.-% an aktivem Katalysator D) verwendet. Die Reaktionsdauer liegt im allgemeinen zwischen 1 und 100 Stunden, vorzugsweise 10 und 25 Stunden. Die Temperatur beträgt vorzugsweise 50 bis 80°C.

Bevorzugt wird die Trimerisationsreaktion am Ende durch Zugabe eines Katalysatorgiftes wie Protonensäuren, Säurechloride oder methylierenden Verbindungen, wie z.B. Toluolsulfonsäuremethylester abgestoppt.

Überraschenderweise wird bei erfindungsgemässen Trimerisation von TDI beobachtet, dass bei zusätzlicher Zugabe von monomerem Diisocyanat - bevorzugt 2,4-TDI - der Endgehalt von TDI im Polyisocyanat nicht zunimmt, sondern sinkt. Überraschenderweise gelingt mit diesem Verfahren die Herstellung von weitgehend monomerenfreien TDI-Trimerisat-Lösungen.

Weiterhin kann nach beendeter Trimerisationsreaktion noch eine weitere Modifizierung des Reaktionsprodukts mit niedermolekularen oder/und polymeren Hydroxylgruppen enthaltenden Verbindungen erfolgen.

Bei den durch das erfindungsgemäße Verfahren hergestellten Polyisocyanaten handelt es sich um wertvolle, unter dem Einfluss von Luftfeuchtigkeit aushärtbare Beschichtungsmaterialien. Sie können ebenfalls in oder zur Herstellung von Haftvermittlern, Klebstoffen, Druckfarben, Dichtstoffen und Polyurethanformkörpem Verwendung finden.

Besonders bevorzugt werden sie als Vernetzer in 2-Komponentensystemen mit an sich bekannten isocyanatreaktiven Verbindungen eingesetzt. Hierzu zählen beispielsweise hydroxyfunktionelle Polyether, -ester, -amide, -carbonate, -acrylate, -butadiene bzw. Mischtypen der genannten hydroxyfunktionellen Polymeren.

Auch niedermolekulare Di- und Polyole, Di- und Trimerfettalkohole sowie aminofunktionelle Verbindungen können in 2K-Systemen Verwendung finden.

Mit blockierten isocyanatreaktiven Verbindungen können auch Einkomponentensysteme formuliert werden, ebenso können die nach dem erfindungsgemäßen Verfahren hergestellten Produkte auch in blockierter Form als oder in Beschichtungsmaterialien eingesetzt werden. Hierbei erfolgt die Trocknung bei höheren Temperaturen bis ca. 200°C.

Neben den erfindungsgemäßen Verfahrensprodukten können in den Beschichtungen auch andere Hilfs- und Zusatzmittel wie beispielsweise die üblichen Benetzungsmittel, Verlaufsmittel, Hautverhinderungsmittel, Antischaummittel, Lösungsmittel, Mattierungsmittel wie beispielsweise Kieselsäure, Aluminiumsilikate und hochsiedende Wachse, viskositätsregulierende Stoffe, Pigmente, Farbstoffe, UV-Absorber, Stabilisatoren gegen thermischen bzw. oxidativen Abbau eingesetzt werden.

Die erhaltenen Beschichtungsmaterialien können zur Beschichtung beliebiger Substrate wie beispielsweise Holz, Kunststoffe, Leder, Papier, Textilien, Glas, Keramik, Putz, Mauerwerk, Metalle oder Beton verwendet werden.

Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Die aus den erfindungsgemäßen Produkten hergestellten Beschichtungen härten bei 20°C im allgemeinen während eines Zeitraums von einigen Minuten bis Stunden zu hochwertigen Überzügen aus. Die Härtung kann jedoch auch bei tieferen Temperaturen (bis -5°C) oder beschleunigt bei höheren Temperaturen bis 200°C erfolgen.

### Beispiele

Alle Angaben in "Teilen" und "%" beziehen sich auf das Gewicht. NCO-Gehalte wurden in dem Fachmann bekannter Weise durch Titration bestimmt.

### Vergleichsbeispiel 1

In einer Rührapparatur wurden 500 g Butylacetat und 500 g Desmodur® T80 (Gemisch aus 80 % 2,4-Diisocyanatotoluol und 20 % 2,6-Diisocyanatotoluol) bei 50°C kontinuierlich mit 4,4 g Katalysatorlösung (Verdünnung (40 %ig in Butylacetat) einer 35 %igen Lösung einer Mannich-Base auf Basis Bisphenol A/Dimethylamin in Xylol) versetzt und gerührt. Der Ansatz wurde gerührt, bis der NCO-Gehalt auf 8,0 % abgesunken war. Zur Beendigung der Trimerisationsreaktion wurde das entstandene Produkt mit der 1,5fachen Gewichtsmenge (bezogen auf zugegebene Katalysatormenge) Toluolsulfonsäuremethylester versetzt und für eine Stunde auf 80°C erhitzt. Der Festkörpergehalt wurde durch Lösungsmittelzugabe auf 50 % eingestellt. Das Produkt hat folgende Kenndaten:

| | |
|---|---|
| NCO-Gehalt: | 8,0 % |
| Festkörpergehalt: | 50 % |
| Viskosität bei 23 °C: | 1100 mPas |
| fr. TDI-Gehalt: | 0,30 % (bestimmt mittels GC) |

### Vergleichsbeispiel 2

In einer Rührapparatur wurden 500 g Butylacetat und 500 g Desmodur® T80 (Gemisch aus 80 % 2,4-Diisocyanatotoluol und 20 % 2,6-Diisocyanatotoluol) bei 50°C kontinuierlich mit 4,5 g Katalysatorlösung ((Mannich-Base auf Basis Phenol/Dimethylamin, 80 %ig in Butylacetat) versetzt und gerührt. Der Ansatz wurde gerührt, bis der NCO-Gehalt auf 8,0 % abgesunken war. Zur Beendigung der Trimerisationsreaktion wurde das entstandene Produkt mit der 1,5 fachen Gewichtsmenge (bezogen auf zugegebene Katalysatormenge) Toluolsulfonsäuremethylester versetzt und für eine Stunde auf 80°C erhitzt. Der Festkörpergehalt wurde durch Lösungsmittelzugabe auf 50 % eingestellt. Das Produkt hatte folgende Kenndaten:

| | |
|---|---|
| NCO-Gehalt: | 8,0 % |
| Festkörpergehalt: | 50 % |
| Viskosität bei 23°C: | 1400 mPas |
| fr. TDI-Gehalt: | 0,53 % (bestimmt mittels GC). |

### Beispiel 1 (erfindungsgemäßes Verfahren)

In einer Rührapparatur wurden 500 g Butylacetat und 500 g Desmodur® T80 (Gemisch aus 80 % 2,4-Diisocyanatotoluol und 20 % 2,6-Diisocyanatotoluol) bei 50°C kontinuierlich mit 5,9 g Katalysatorlösung (Verdünnung (40 %ig in Butylacetat) einer 35 %igen Lösung einer Mannich-Base auf Basis Bisphenol A/Dimethylamin in Xylol) versetzt und gerührt. Bei NCO-Werten von 10,45 % sowie bei 8,7 % wurden nacheinander zunächst 40 g und dann 20 g 2,4-Diisocyanatotoluol zugegeben. Der Ansatz wurde weiter katalysiert und gerührt, bis der NCO-Gehalt auf 8,0 % abgesunken war. Zur Beendigung der Trimerisationsreaktion wurde das entstandene Produkt mit der 1,5fachen Gewichtsmenge (bezogen auf zugegebene Katalysatonnenge) Toluolsulfonsäuremethylester versetzt und für eine Stunde auf 80°C erhitzt. Der Festkörpergehalt wurde durch Lösungsmittelzugabe auf 50 % eingestellt. Das Produkt hatte folgende Kenndaten:

| | |
|---|---|
| NCO-Gehalt: | 8,0 % |
| Festkörpergehalt: | 50 % |
| Viskosität bei 23°C: | 1300 mPas |
| fr. TDI-Gehalt: | 0,05 % (bestimmt mittels GC) |

### Beispiel 2 (erfindungsgemäßes Verfahren)

In einer Rührapparatur wurden 500 g Butylacetat und 500 g Desmodur® T80 (Gemisch aus 80 % 2,4-Diisocyanatotoluol und 20 % 2,6-Diisocyanatotoluol) bei 50°C kontinuierlich mit 6,17 g Katalysatorlösung (Verdünnung (40 %ig in Butylacetat) einer 35 %igen Lösung einer Mannich-Base auf Basis Bisphenol A/Dimethylamin in Xylol) versetzt und gerührt. Bei einem NCO-Gehalt von 9,05 % wurde 30 g 2,4-Diisocyanatotoluol zugegeben. Der Ansatz wurde weiter katalysiert und gerührt, bis der NCO-Gehalt auf 8,0 % abgesunken war. Zur Beendigung der Trimerisationsreaktion wurde das entstandene Produkt mit der 1,5 fachen Gewichtsmenge (bezogen auf zugegebene Katalysatormenge) Toluolsulfonsäuremethylester versetzt und für eine Stunde auf 80°C erhitzt. Der Festkörpergehalt wurde durch Lösungsmittelzugabe auf 50 % eingestellt. Das Produkt hatte folgende Kenndaten:

| | |
|---|---|
| NCO-Gehalt: | 8,0 % |
| Festkörpergehalt: | 50 % |
| Viskosität bei 23°C: | 1500 mPas |
| fr. TDI-Gehalt: | 0,09 % (bestimmt mittels GC) |

## Patentansprüche

1. Verfahren zur Herstellung Lösemittel und Isocyanuratgruppen enthaltender Polyisocyanate auf Basis 2,4- und/oder 2,6-Diisocyanatotoluol mit einem Gehalt an monomerem Diisocyanat von < 0,1. Gew.%, **dadurch gekennzeichnet, dass** in einer Mischung aus
A) 20 bis 80 Gew.% einer Diisocyanatkomponente enthaltend mindestens 80 Gew.% 2,4- und/oder 2,6-Diisocyanatotoluol,
B) 20 bis 80 Gew.% Lösemittel und
C) 0 bis 20 Gew.-% einer Alkoholkomponente, sowie
D) Dialkylaminomethylgruppen enthaltenden phenolischen Katalysatoren,
bei einer Temperatur von 20°C bis 120° eine katalytische Trimerisationsreaktion durchgeführt wird und während der laufenden Trimerisierung in einem oder mehreren Schritten zusätzlich 0,1 bis 25 Gew.%, bezogen auf die Einsatzmenge an Diisocyanaten, monomeres 2,4-Diisocyanatotoluol zudosiert wird und anschließend, gegebenenfalls durch Zugabe von Katalysatorgiften (Abstoppung), die Reaktion beendet wird.

2. Verfahren nach Anspruch 1, **dadurch gekennzeichnet, dass** die Menge des während der laufendenden Trimerisierung zusätzlich zudosierten monomeren 2,4-Diisocyanatotoluols 10 bis 20 Gew.% beträgt.

3. Verfahren nach Anspruch 1, **dadurch gekennzeichnet, dass** die Menge des während der laufendenden Trimerisierung zusätzlich zudosierten monomeren 2,4-Diisocyanatotoluols 1 bis 10 Gew.% beträgt.

4. Verfahren nach Anspruch 1, **dadurch gekennzeichnet, dass** Katalysatoren eingesetzt werden, die in einem Molekül sowohl Dialkylaminomethylgruppen (Alkyl = C₁ bis C₃-Kette) als auch phenolische OH-Gruppen enthalten.

5. Verfahren nach Anspruch 4, **dadurch gekennzeichnet, dass** Katalysatoren eingesetzt werden, die Mannichbasen enthalten, die aus Phenol, p-Isononylphenol oder Bisphenol A durch Umsetzung mit Dimethylamin und Formaldehyd erhalten werden.

6. Verfahren nach Anspruch 1, **dadurch gekennzeichnet, dass** die Trimerisation bei einer Temperatur von 50 bis 80 °C durchgeführt wird.

7. Verfahren nach einem der Ansprüche 1-6, **dadurch gekennzeichnet, dass** als Ausgangsdiisocyanat eine Mischung von 2,4- und 2,6-Diisocyanatotoluol im Gewichtsverhältnis 3:2 bis 9:1 eingesetzt wird.

## Claims

1. Process for preparing solvent-containing polyisocyanates based on 2,4- and/or 2,6-diisocyanatotoluene which contain isocyanurate groups and <0.1% by weight of monomeric diisocyanate, **characterized in that** in a mixture of
A) from 20 to 80% by weight of a diisocyanate component containing at least 80% by weight of 2,4- and/or 2,6-diisocyanatotoluene,
B) from 20 to 80% by weight of solvent and
C) 0 - 20% by weight of an alcohol component, and also
D) phenolic catalysts containing dialkylaminomethyl groups,
at a temperature from 20°C to 120° a catalytic trimerization reaction is carried out and in the course of ongoing trimerization additionally 0.1 - 25% by weight, based on the amount of diisocyanates employed, of monomeric 2,4-diisocyanatotoluene is metered in in one or more steps and subsequently, where appropriate by adding catalyst poisons (stopping), the reaction is ended.

2. Process according to Claim 1, **characterized in that** the amount of the monomeric 2,4-diisocyanatotoluene metered in additionally in the course of ongoing trimerization is from 10 to 20% by weight.

3. Process according to Claim 1, **characterized in that** the amount of the monomeric 2,4-diisocyanatotoluene metered in additionally in the course of ongoing trimerization is from 1-10% by weight.

4. Process according to Claim 1, **characterized in that** catalysts are employed which contain in one molecule both dialkylaminomethyl groups (alkyl = C1 to C3 chain) and phenolic OH groups.

5. Process according to Claim 4, **characterized in that** catalysts are used which contain Mannich bases which are obtained from phenol, p-isononylphenol or bisphenol A by reaction with dimethylamine and formaldehyde.

6. Process according to Claim 1, **characterized in that** the trimerization is conducted at a temperature from 50 to 80°C.

7. Process according to one of Claims 1-6, **characterized in that** a mixture of 2,4- and 2,6-diisocyanatotoluene in a weight ratio of from 3:2 to 9:1 is used as starting diisocyanate.

## Revendications

1. Procédé de fabrication de polyisocyanates contenant des solvants et des groupes isocyanurates à base de 2,4-diisocyanate de toluène et/ou 2,6-diisocyanate de toluène avec une teneur en diisocyanate monomère < 0,1 % en poids, **caractérisé en ce que**, dans un mélange de
A) 20 à 80 % en poids d'un composant diisocyanate contenant au moins 80 % en poids de 2,4-diisocyanate de toluène et/ou 2,6-diisocyanate de toluène,
B) 20 à 80 % en poids de solvant et
C) 0 à 20 % en poids d'un composant alcool, ainsi que
D) des catalyseurs phénoliques contenant des groupes dialkylaminométhyles,
on effectue à une température de 20°C à 120° une réaction catalytique de trimérisation et **en ce que**, pendant que la trimérisation se déroule, on ajoute au cours d'une ou plusieurs étapes 0,1 à 25 % en poids, rapportés à la quantité de départ de diisocyanates, du 2,4-diisocyanate de toluène monomère et qu'on termine ensuite la réaction, le cas échéant par addition de poisons de catalyseur (terminaison).

2. Procédé suivant la revendication 1, **caractérisé en ce que** la quantité de monomère de 2,4-diisocyanate de toluène dosée en supplément pendant le déroulement de la trimérisation est de 10 à 20 % en poids.

3. Procédé suivant la revendication 1, **caractérisé en ce que** la quantité de monomère de 2,4-diisocyanate de toluène dosée en supplément pendant le déroulement de la trimérisation est de 1 à 10 % en poids.

4. Procédé suivant la revendication 1, **caractérisé en ce qu'**on utilise des catalyseurs qui contiennent dans une molécule tant des groupes dialkylaminométhyles (alkyle = chaîne en C₁ à C₃) que des groupes OH phénoliques.

5. Procédé suivant la revendication 4, **caractérisé en ce qu'**on utilise des catalyseurs qui contiennent des bases mannich qui sont obtenues par la réaction de phénol, de p-isononylphénol ou de bisphénol A avec de la diméthylamine et du formaldéhyde.

6. Procédé suivant la revendication 1, **caractérisé en ce que** la trimérisation est exécutée à une température de 50 à 80 °C.

7. Procédé suivant l'une des revendications 1-6, **caractérisé en ce qu'**on utilise comme diisocyanate de départ un mélange de 2,4-diisocyanate de toluène et 2,6-diisocyanate de toluène au rapport pondéral de 3:2 à 9:1.
